## Europäisches Patentamt

## European Patent Office

## Office européen des brevets

(19)

(11) Veröffentlichungsnummer : **0 261 108 B1**

(12) **EUROPÄISCHE PATENTSCHRIFT**

(45) Veröffentlichungstag der Patentschrift :
20.09.89

(21) Anmeldenummer : 86901834.1

(22) Anmeldetag : 25.02.86

(86) Internationale Anmeldenummer :
PCT/EP 86/00093

(87) Internationale Veröffentlichungsnummer :
WO/8604967 (28.08.86 Gazette 86/19)

(51) Int. Cl.⁴ : **F 16 C 33/04**, F 16 J 15/34, C 04 B 41/53

(54) GLEIT- ODER DICHTELEMENTPAARUNG.

(30) Priorität : 26.02.85 DE 3506691

(43) Veröffentlichungstag der Anmeldung :
30.03.88 Patentblatt 88/13

(45) Bekanntmachung des Hinweises auf die Patenterteilung : 20.09.89 Patentblatt 89/38

(84) Benannte Vertragsstaaten :
AT BE CH DE FR GB IT LI LU NL SE

(56) Entgegenhaltungen :
EP-A- 0 071 855
DE-A- 1 625 534
DE-B- 1 284 177
FR-A- 1 546 635
US-A- 4 357 202
Patent Abstracts of Japan, Band 9, No. 3 (M-349)(1726), 9. Januar 1985
Chemical Abstracts, Band 97, No. 20, Februar 1982, Columbus, Ohio (US), Seite 311, Zusammenfassung 167886h

(73) Patentinhaber : **Feldmühle Aktiengesellschaft**
**Fritz-Vomfelde-Platz 4**
**D-4000 Düsseldorf 11 (DE)**

(72) Erfinder : **FINGERLE, Dieter**
**Kirchheimer Strasse 34**
**D-7311 Hochdorf (DE)**
Erfinder : **DWORAK, Ulf**
**Pfarrstrasse 50**
**D-7066 Baltmannsweiler 2 (DE)**
Erfinder : **FRIEDERICH, Kilian**
**Hohenstaufenstrasse 20**
**D-7310 Plochingen (DE)**
Erfinder : **OLAPINSKI, Hans**
**Talstrasse 12**
**D-7307 Aichwald 1 (DE)**

## Beschreibung

Die Erfindung betrifft eine Gleit- oder Dichtelementpaarungpaarung aus Hartstoffen, insbesondere aus gesintertem Aluminiumoxid, bei der mindestens zwei Elemente miteinander in Eingriff stehen, wobei mindestens eines der Elemente als dynamisches und das andere als statisches Element ausgeführt ist und die in Eingriff stehenden Oberflächen zur Erzielung einer hohen Maßgenauigkeit und Glätte geschliffen und geläppt sind.

Unter Gleitelementen im Sinne der vorliegenden Erfindung sollen ganz allgemein Gleitlager verstanden werden, also sowohl plane aufeinander gleitende Flächen als auch Buchsen und Wellen für rotierende Aggregate. Unter Dichtelementen im Sinne der Erfindung sollen lediglich solche Dichtelemente verstanden werden, die zueinander zumindest zeitweise sich in einer Bewegung befinden, also mechanische Gleitringdichtungen auf der einen Seite, aber auch Teile für Armaturen, wie Kugelküken und Ventilsitze oder Dichtscheiben für Sanitärarmaturen.

Bei allen diesen Aggregaten besteht das Bedürfnis, die Reibung der aufeinander gleitenden und teils dichtenden Teile herabzusetzen, ohne daß Dichtungsprobleme auftreten. Besonders vielschichtig sind jedoch die Probleme bei Dichtscheiben von Sanitärarmaturen, da hier nicht nur kontinuierlich wechselnde thermische Bedingungen auftreten, sondern auch mit langen Stillstandszeiten zwischen einzelnen Betätigungszyklen zu rechnen ist. Die Erfindung wird daher nachstehend am Beispiel von Dichtscheiben für Sanitärarmaturen abgehandelt, ohne sie jedoch darauf zu beschränken.

Zur Betätigung von Sanitärarmaturen, insbesondere von Einhebelmischarmaturen, die mit aufeinander dichtend gleitenden Keramikscheiben arbeiten, werden sehr unterschiedliche Kräfte benötigt. Das Öffnen und Schließen einer Armatur dieser Art erfolgt durch Heben bzw. Senken des Bedienungshebels, wobei aufgrund einer recht großen Hebelübersetzung — im allgemeinen mehr als 10 : 1 — die vom Benutzer der Armatur ausgeübten Kräfte relativ wenig wahrgenommen werden, die Steuerglieder der Armatur andererseits jedoch hoch beansprucht werden. Wegen der mehr direkten Kraftübertragung nimmt der Bediener der Armatur die Drehbewegung, mit der die Temperatur des Wassers gesteuert wird, wesentlich stärker wahr. Eine Schwergängigkeit der Armatur in diesem Bereich ist für den Benutzer deshalb auch sehr problematisch, weil dadurch die Feineinstellung der Temperatur erschwert wird. Eine dritte Kraft, die vom Benutzer der Armatur berücksichtigt werden muß und für ihn immer wieder überraschend ist, ist die sogenannte Loslösekraft.

Diese Loslösekraft ist besonders nach längerem Stillstand der Armatur recht hoch und beträgt ein Vielfaches der vorgenannten als Betriebskräfte bezeichneten Kräfte, die zur Erzeugung der Drehbewegung bzw. der Öffnung oder Schließung der Armatur erforderlich sind. Sie beruht auf der vergrößerten Dichtflächenhaftung und bildet das eigentliche Kriterium der Armatur besonders, wenn die Dichtscheiben über aus Kunststoff bestehende Steuerelemente betätigt werden soll, wie das bei mehr oder weniger allen modernen Armaturen der Fall ist, bei denen die Dichtscheiben in Kunststoffgehäusen als Kartuschen zusammengefaßt sind. Nur zur Vervollständigung soll ausgeführt werden, daß diese Loslösekraft selbstverständlich auch beim Anlauf von Gleitringdichtungen oder Gleitlagern berücksichtigt werden muß, sich also auch hier das gleiche Phänomen ergibt.

Zur Lösung dieser Probleme wurde mit der britischen Patentschrift 627 436 bereits vorgeschlagen, Hohlräume in die Dichtscheiben einzubringen und diese mit Fett zu füllen. Ein analoger Vorschlag für Gleitringdichtungen ist in der deutschen Offenlegungsschrift 29 28 504 enthalten, ebenso befaßt sich die deutsche Offenlegungsschrift 32 11 409, die wiederum auf die Anordnung von Dichtscheibe gerichtet ist, mit einem solchen Vorschlag. Die DE-PS 2 99 125 betrifft als solche Gleitlager, und zwar Gleitlager mit aufgerauhten Gleitflächen, die durch die Aufrauhung weit weniger leicht fressen und unempfindlicher gegen Schmiermittelmangel sind, weil sich das Schmiermittel in den Gleitflächen besser ansammeln und halten kann. Die FR-PS 15 97 609 beschreibt und zeigt ebenfalls Flächen, die mit Ausnehmungen versehen sind, geht aber nicht über das hinaus, was bereits aus den vorstehenden Schriften bekannt ist. Aus der GB-PS 11 26 771 sind gerändelte Gleitlager bekannt, bei denen ein Gleitlager eine Aluminiumoxidschicht und der andere eine Kadmiumschicht trägt. Die eingebrachte Rändelung verläuft zwischen 50 und 90 Grad zur Bewegungsrichtung, wobei die Vertiefungen eine Tiefe von 0,1 und eine Entfernung zueinander von 1,5 mm aufweisen. Alle diese Schriften gehen dabei davon aus, daß die miteinander in Berührung stehende Fläche verringert werden muß und möglichst in die dabei entstehenden Hohlräume, die als gut sichtbare Ausnehmungen im Macrogrößenbereich angesiedelt sind, Fett eingelagert werden soll, wodurch die Reibung zusätzlich verringert würde. Die Praxis hat jedoch ergeben, daß auf der einen Seite das Fett durch die Strömung aus diesen relativ großen Räumen herausgespült wird und so seine Funktion überhaupt nicht mehr erfüllen kann. Es sich vielmehr als störender Bestandteil nach Passieren der Armatur im Fördermedium befindet. Da desweiteren aufgrund des eingebrachten « Waffelmuster » in der Dichtscheibe nur schmale Stege stehenbleiben, die jetzt die Dichtfunktion übernehmen sollen, kommt es im Bereich dieser Stege leicht zu Beschädigungen der Dichtscheibe, so daß die Gefahr der Undichtigkeit der Armatur gegeben ist bzw. die Dichtscheibe erfüllt von vornherein ihre Funktion nicht.

Aus der DE-OS 32 13 378 sind Gleitkörper bekannt, die mit Hohlkammern versehen sind, wobei diese Hohlkammern gekühlt oder geheizt werden können. Angestrebt wird durch diese Maßnahme eine steuerbare Welligkeit des Gleitkörpers, wobei diese Welligkeit allerdings nur orientiert und im Größenbereich von einigen Millimetern sein kann, da die Kammern sonst zu klein sind und dadurch ihren Zweck auf Kühlung oder Heizung separater Bereiche nicht erfüllen können.

Dem DE-GM 18 58 666 ist die funkenerosive Bearbeitung von Laufflächen von Gleitlagern zu entnehmen, die dadurch mit Kratern bzw. Näpfchen versehen werden. Diese Näpfchen bzw. Krater dienen dazu, Öl oder Fett aufzunehmen, um den Schmierfilm besser zu halten. Sieht man davon ab, daß es ausgesprochen schwierig ist, die funktenerosive Bearbeitung auf Keramikflächen zu übertragen, so werden dabei scharfkantige Krater erzielt, die ebenfalls im Makrobereich liegen.

Der vorliegenden Anmeldung liegt damit die Aufgabe zugrunde, die zur Betätigung einer Gleit- oder Dichtelementpaarung erforderlichen Kräfte weitmöglichst zu senken, ohne daß bei Dichtelementen die Dichtheit beeinträchtigt wird.

Bei einer Gleit- und Dichtelementpaarung gemäß Oberbegriff wird diese Aufgabe dadurch gelöst, daß mindestens eine Oberfläche eines Elementes zumindest in Teilbereichen mit einer hohen Mikrowelligkeit versehen ist. Es ist dabei nicht von ausschlaggebender Bedeutung, ob das statische Element, oder das dynamische Element mit einer hohen Mikrowelligkeit versehen ist, wesentlich ist nur, daß mindestens eine der miteinander in Eingriff stehenden Oberflächen diese Mikrowelligkeit, d. h. eine Verrundung der Korngrenzen und/oder Poren, aufweist. Selbstverständlich ist es auch möglich, beide miteinander in Eingriff stehenden Oberflächen mit dieser Mikrowelligkeit zu versehen und dadurch eine noch bessere Leichtgängigkeit zu erreichen. Einzige Bedingung in allen drei Fällen ist, daß das Verhältnis der Traganteile im Rahmen des Üblichen liegt, so daß nicht durch Kombination von zwei Elementen mit niedrigem Traganteil eine Undichtigkeit entsteht.

Unter Mikrowelligkeit im Sinne der vorliegenden Erfindung ist sowohl die Verrundung der Korngrenzen als auch die Verrundung von Poren zu verstehen, wobei die durch das Verrunden entstandenen Vertiefungen im Bereich zwischen 0,05 bis 3,00 µm liegen. Selbstverständlich ist die Ätztiefe abhängig von der Korngröße, die in der Oberfläche vorhanden ist. So ist bei einem feinen Korn der untere Bereich, d. h. der Bereich zwischen 0,05 und 0,2 µm zugrundezulegen, bei einem groberen Korn der obere Bereich, d. h., daß hier Tiefen zwischen 0,5 und 3,0 µm auftreten.

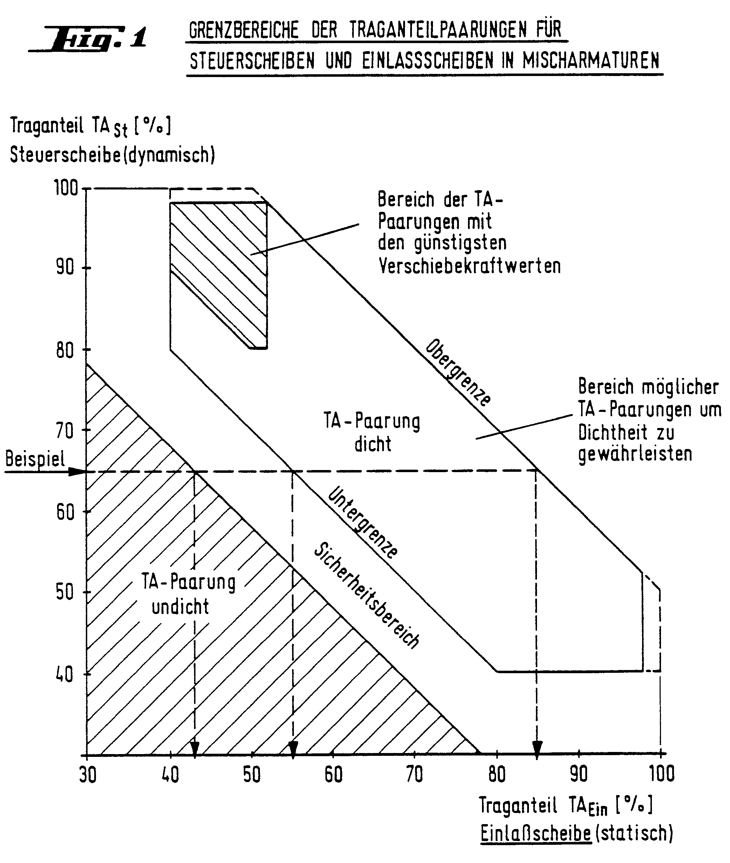

Wie dem nachstehenden Schaubild — Figur 1 — zu entnehmen ist, liegt die Untergrenze der Dichtheit einer Dichtelementpaarung bei einem Traganteil von 40 % der einen Oberfläche, kombiniert mit einem Traganteil von 80 % der Gegenfläche. In diesen Angaben ist bereits schon ein Sicherheitsbereich einbegriffen, so daß sich auch Bearbeitungstoleranzen nicht negativ auf die Dichtigkeit der Paarung auswirken können.

Der Traganteil kann durch Auswahl der Diamantkörnung in weiten Bereichen beim Läppvorgang beeinflußt werden. Es ergeben sich jedoch, wie Rasterelektronenmikroskopaufnahmen zeigen, bei dieser mechanischen Bearbeitung im Normalfall scharfkantige Poren, die durch das Herauslösen einzelner Körner oder Kornbruchteile entstehen. Diese in der geläppten Fläche von gesinterter Oxidkeramik immer vorhandenen Mikroausnehmungen haben einen großen Einfluß auf die bei der Bewegung der Elementpaarung gegeneinander auftretenden Kräfte, da im wesentlichen durch sie der Traganteil bestimmt wird.

Überraschenderweise ist es jetzt gelungen, durch Verrunden der Poren und des einzelnen Kornes an den Korngrenzen, also durch Abrundung der scharfen Kanten der Poren und der Korngrenzen des Gefüges, so daß sich vergrößert betrachtet, eine Art Orangenschalenhaut bildet, die Reibwerte erheblich zu senken.

Selbstverständlich hängt die Verrundung der Poren nicht nur von der Korngröße des gesinterten Materials, sondern auch ganz wesentlich von seiner chemischen Zusammensetzung ab. Bei Einsatz von gesintertem Aluminiumoxid wird gemäß einer vorteilhaften Ausgestaltung der Erfindung die Oberfläche chemisch geätzt. Die Ätzdauer liegt dabei zweckmäßig zwischen 1 und 5 Minuten, die Temperatur zwischen 200 und 250 Grad, wobei als Ätzmittel $H_3PO_4$ eingesetzt wird.

Die Materialien, aus denen die Gleit- oder Dichtelemente hergestellt werden, sind ebenso wie die Gleit- oder Dichtelemente als solche bekannt. So wird beispielsweise in der DE-PS 31 16 801 eine Ventilscheibe aus einem speziellen Siliziumkarbidmaterial beschrieben und die DE-PS 12 91 957 und 12 82 377 sowie die DE-OS 23 49 131 befassen sich mit Dichtelementen auf der Basis von Aluminiumoxidkeramik. Die eigene ältere Anmeldung, die DE-OS 30 25 596 betrifft Dichtelemente, die außer Aluminiumoxid noch bis zu 25 % Zirkon- und/oder Hafniumoxid enthalten. Aus der DE-PS 88 02 41 ist ferner das anodische Ätzen einer Lauffläche bekannt. Dieses Verfahren ist jedoch auf Keramik als Nichtleiter nicht übertragbar.

Gemäß einer bevorzugten Ausgestaltung der Erfindung erfolgt das Ätzen auf thermischem Wege, wobei die Temperaturen vorzugsweise zwischen 1.400 und 1.560 Grad liegen und die Behandlungsdauer 3 bis 7 Stunden beträgt.

Gemäß einer vorteilhaften Ausgestaltung des Verfahrens gemäß der Erfindung wird im Anschluß an das Läppen die im Eingriff stehende Oberfläche durch Sandstrahlen nachbearbeitet. Unter Sandstrahlen im Sinne der vorliegenden Erfindung wird dabei insbesondere ein Beschießen mit Siliziumkarbidpartikeln verstanden, nicht jedoch der Einsatz von üblichem Sand, Metall, Schrot oder Glasperlen, wie es beispielsweise aus der DE-OS 21 08 341 oder der Literaturstelle « Metalloberfläche, 7/1974, S. 270 » bekannt ist. Das Strahlen von Keramikflächen mit Glasperlen führt nicht zu einem Materialabtrag, da sich die Glaskugel an der harten Keramikfläche verformt. Es findet im Gegenteil der Aufbau einer Beschichtung auf der Keramik statt, wodurch mit Glas gestrahlte Teile unbrauchbar werden.

Die Erfindung wird nachstehend anhand von Beispielen inform von graphischen Darstellungen und rasterelektronmikroskopischen Aufnahmen erläutert.

Fig. 1 zeigt die Grenzbereiche der Traganteilpaarungen für die die Kombination Steuerscheibe/Einlaßventil in Mischarmaturen. Die Steuerscheibe ist dabei das dynamische Element, die Einlaßscheibe das statische Element. Das Schaubild zeigt dabei eindeutig, daß Paarungen unterhalb der 80 % Linie undicht sind.

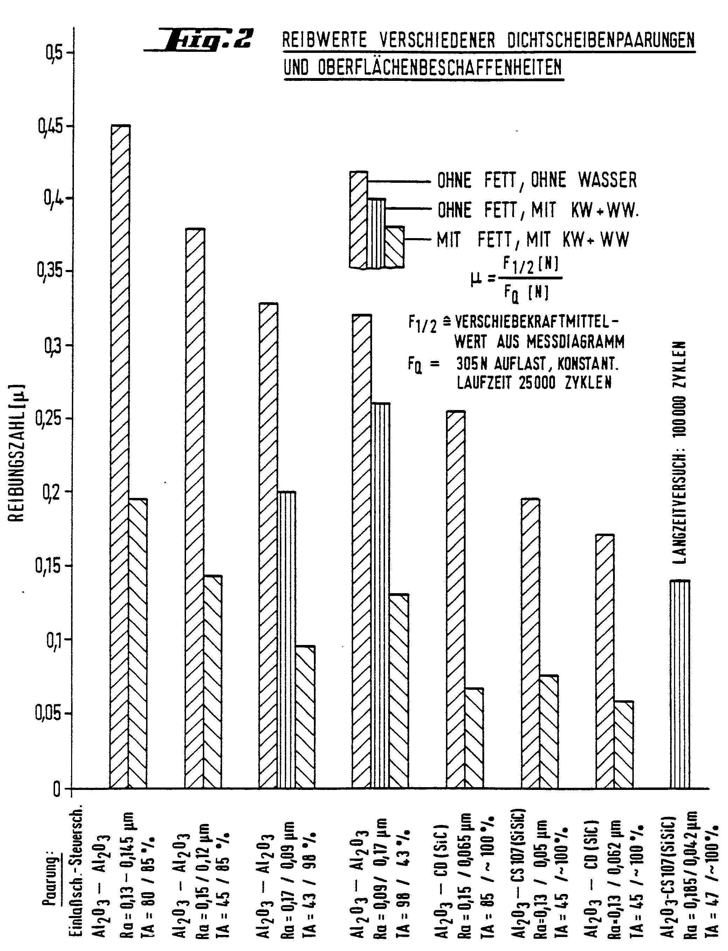

Fig. 2 zeigt eine Übersicht über die Reibungswerte verschiedener Dichtscheibenpaarungen und unterschiedlicher Oberflächenbeschaffenheiten, die unter unterschiedlichen Konditionen gegeneinander laufen. Gemessen wurde die Reibungszahl u bei den Kombinationen $Al_2O_3$ gegen $Al_2O_3$ sowie $Al_2O_3$ gegen Siliziumkarbid bei unterschiedlichen Rauhtiefen $R_a$, unterschiedlichen Traganteilen TA sowohl im Trockenlauf, also ohne Fett und ohne Wasser, als auch im Naßlauf ohne Fett nur mit Wasser und im Naßlauf unter zusätzlicher Fettschmierung. Die Reibungszahl u wurde dabei nach der Formel

$$u = \frac{F1/2\ N}{F\quad N}$$

wobei F1/2 dem Verschiebekraftmittelwert aus den Messdiagrammen entsprach und F einer konstanten Auflast von 305 N bei einer Laufzeit von 25.000 Zyklen.

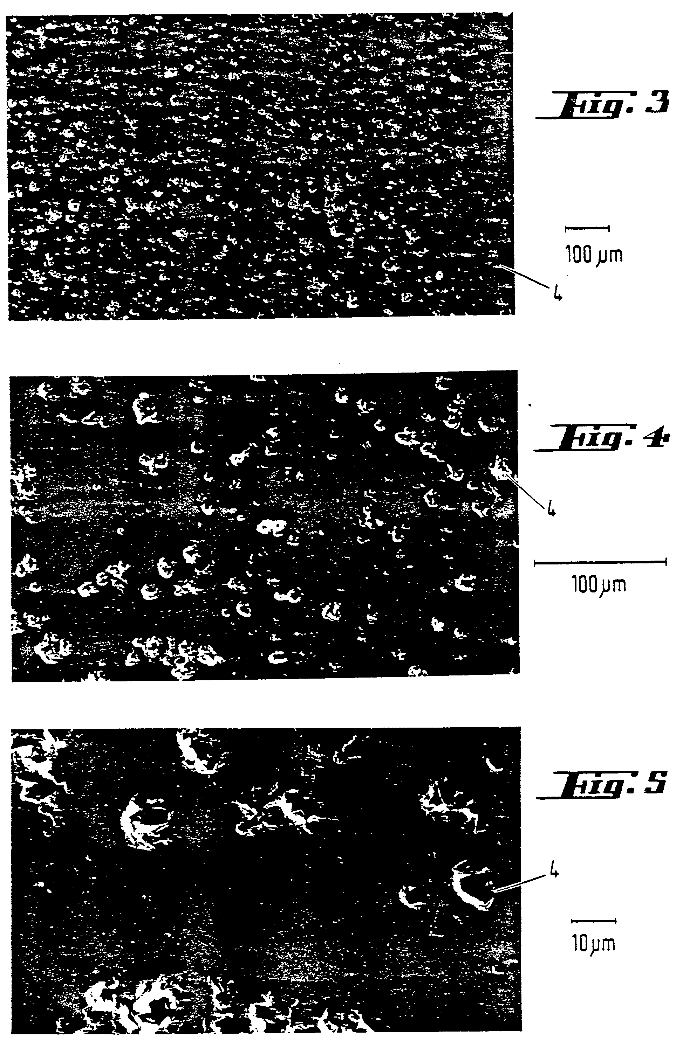

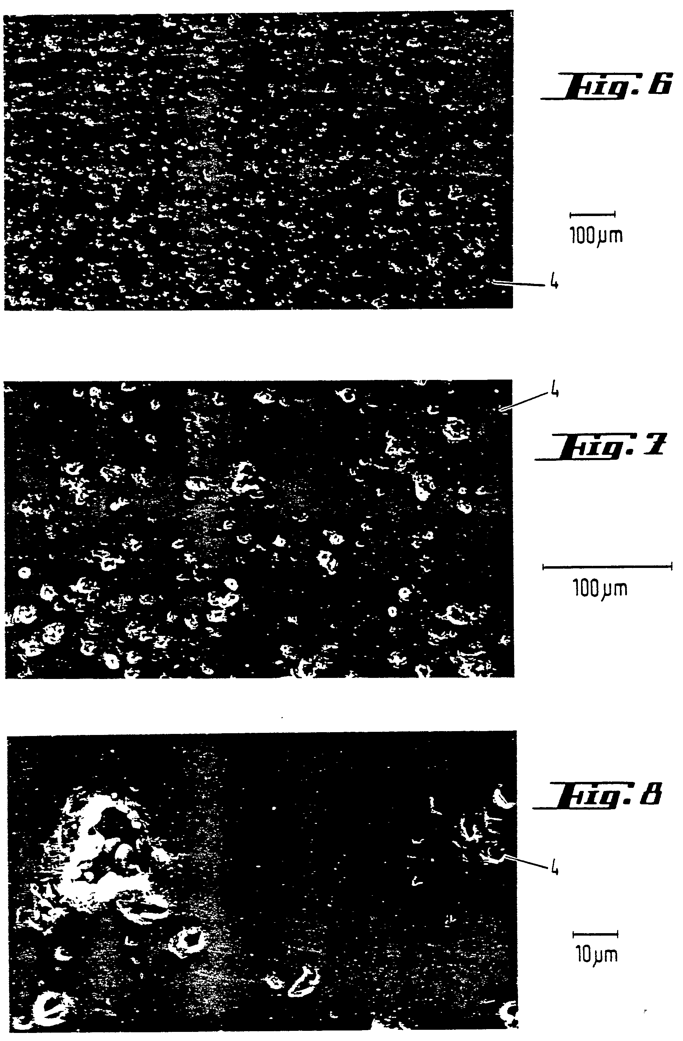

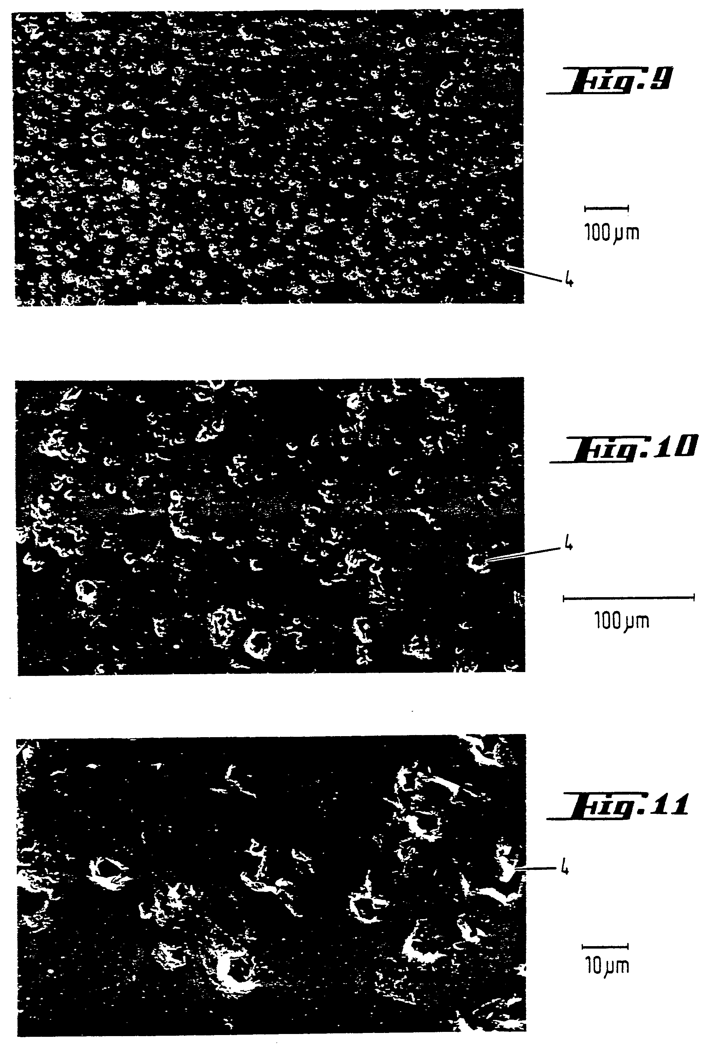

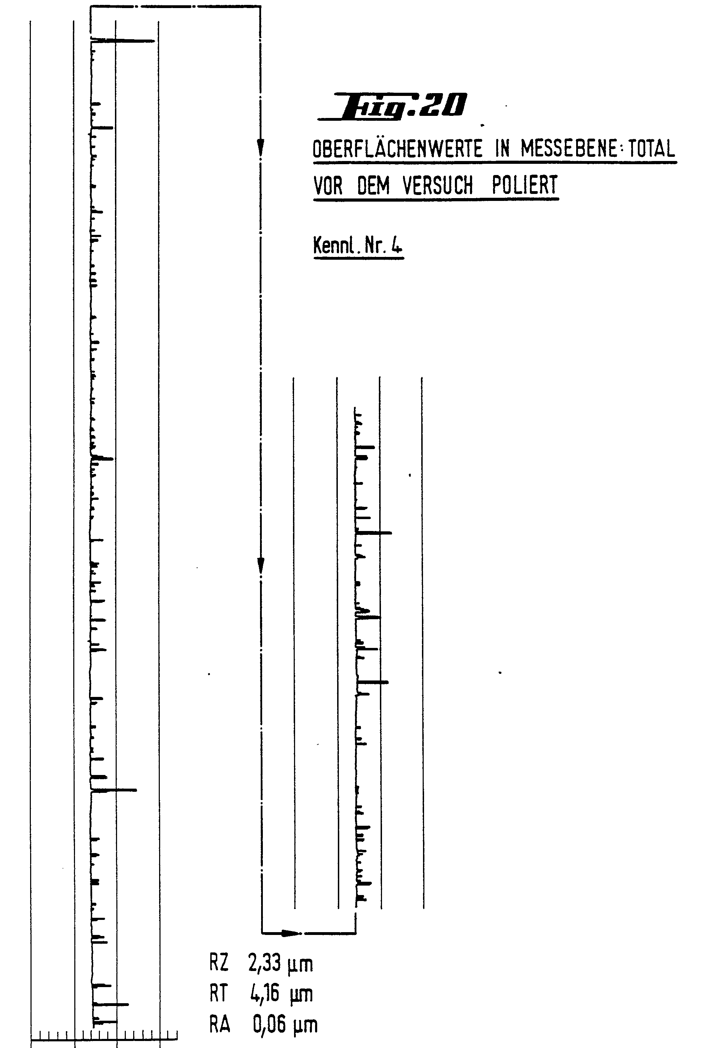

Die Fig. 3 bis 17 sind Rasterelektronenmikroskopaufnahmen, wobei jeweils 3 Figuren mit der Vergrößerung 100, 300 und 1.000 auf einem Blatt zusammengefaßt sind und sich auf eine Dichtscheibe beziehen. Dem jeweiligen Blatt ist die Nummer einer Kennlinie zugeordnet, die sich sowohl bei den Kennlinien als auch in der Tabelle wiederfindet.

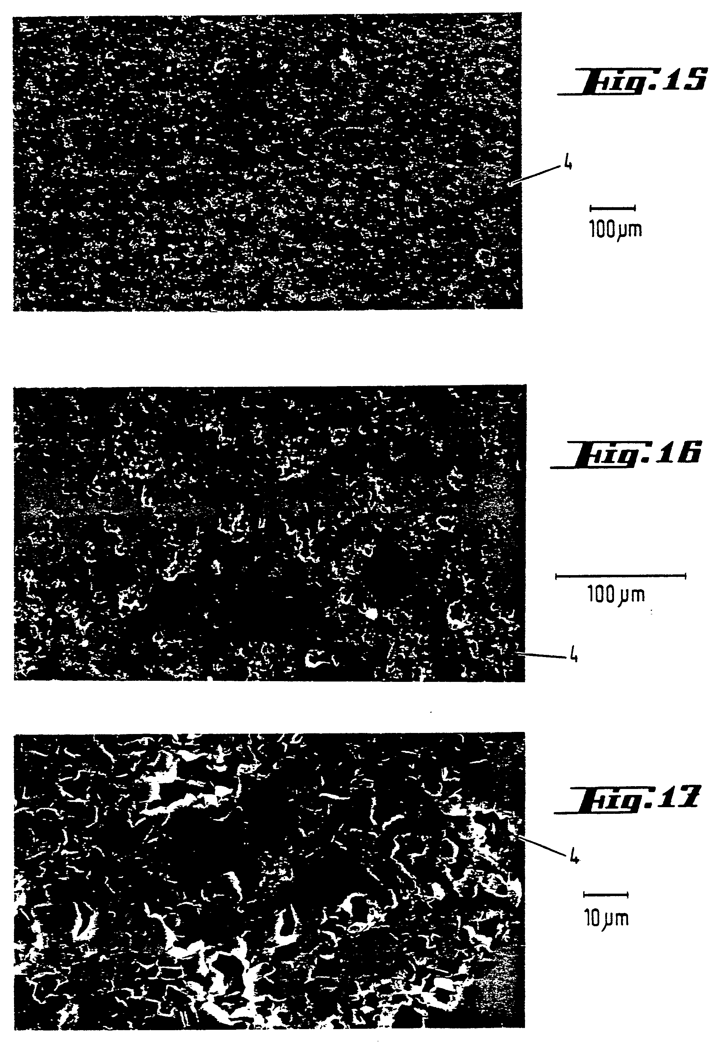

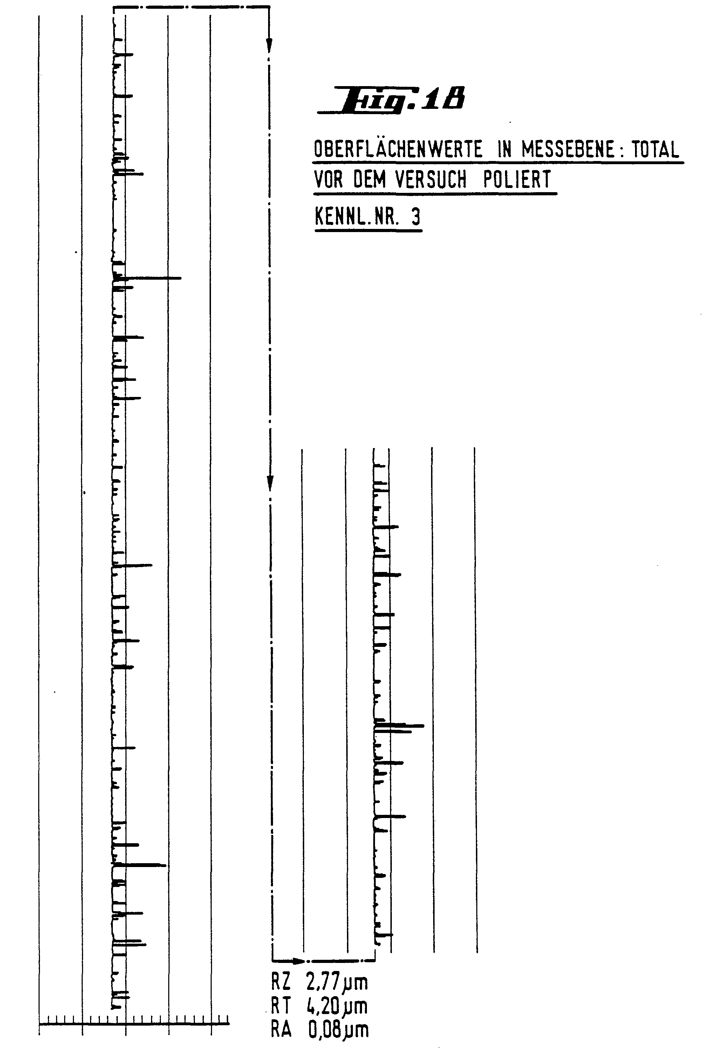

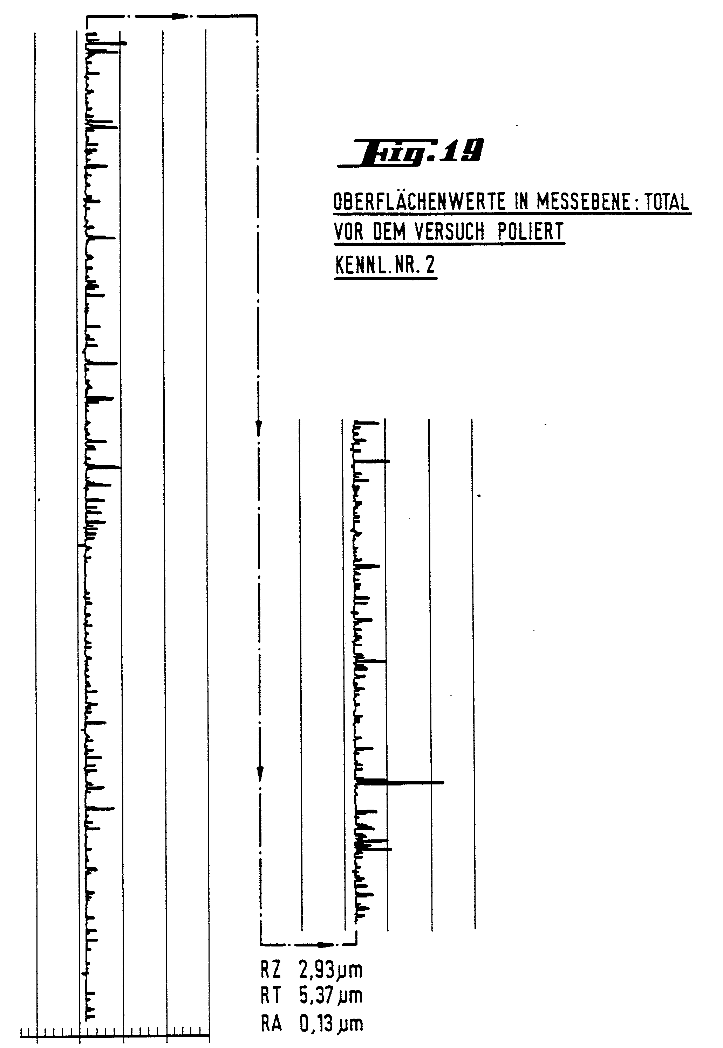

Die Fig. 3 bis 5 entsprechen der Kennlinie 4. Diese Dichtscheibe — statisches Element — weist einen Traganteil von 78 % auf. Dabei handelt es sich um eine Scheibe aus gesintertem Aluminiumoxid, die nach dem Schleifen poliert wurde. Im Vergleich dazu sind die Fig. 15, 16 und 17 zu sehen, die materialmäßig identisch sind und auch mechanisch identisch bearbeitet wurden, woran sich aber an diese Bearbeitung eine chemische Ätzung von 3 Minuten bei 230 Grad in $H_3PO_4$ angeschlossen hat, so daß sich, wie schon die REM-Aufnahmen zeigen, ein völlig anderes Oberflächenbild ergibt. Der Traganteil ist durch die Ätzung auf 40 % reduziert worden, die Reibzahl u für Gleitreibung auf 0,11 und $u_0$ für Haftreibung auf 0,18 reduziert worden. Als Gegenlaufscheibe, also als dynamisches Element, wurde eine Scheibe aus poliertem Aluminiumoxid mit einem Traganteil von 71 % eingesetzt.

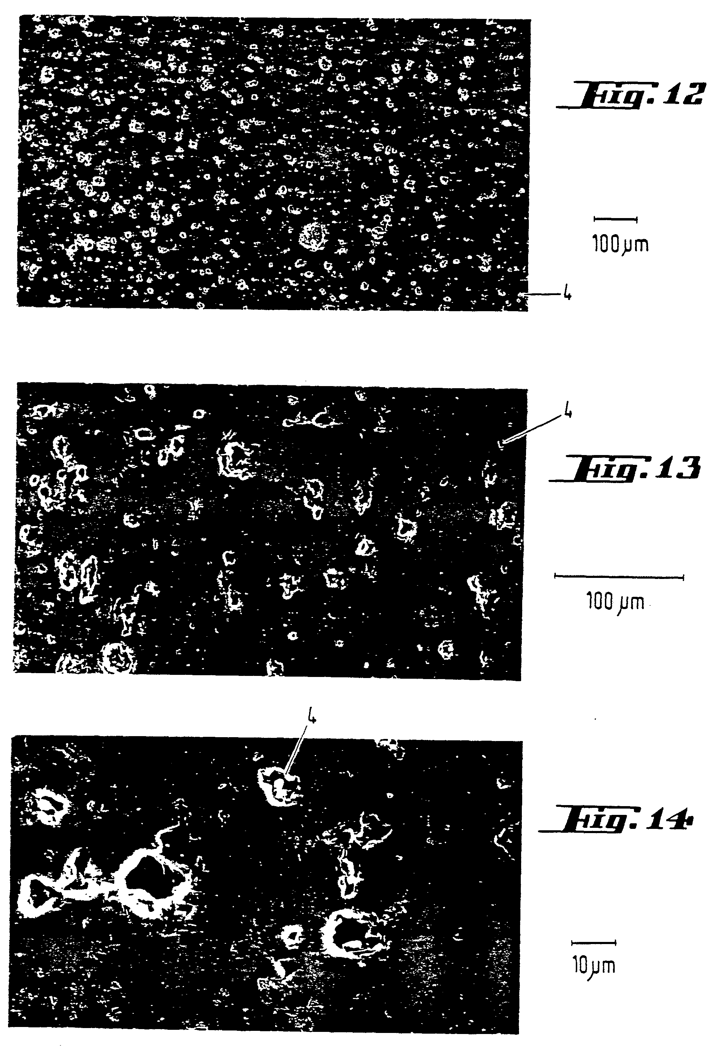

Die Fig. 6, 7 und 8 zeigen ebenfalls ein statisches Element, wobei Fig. 6 100-fach, Fig. 7 300-fach und Fig. 8 die 1 000-fache Vergrößerung darstellt. Es handelt sich um eine Dichtscheibe aus poliertem Aluminiumoxid, deren Traganteil 73 % beträgt. Die Probe entspricht der Kennlinie Nr. 3.

Auch die Fig. 9, 10, 11 sind Rasterelektronenmikroskopaufnahmen in 100-, 300-bzw. 1.000-facher Vergrößerung. Auch hier handelt es sich um eine Dichtscheibe aus poliertem Aluminiumoxid. Der Traganteil beträgt 45 %, die Aufnahmen entsprechen der Kennlinie Nr. 2.

Bei den Fig. 12, 13 und 14 ist das gleiche Vergrößerungsverhältnis eingehalten, also 100, 300 und 1.000. Auch hierbei handelt es sich um eine Dichtscheibe aus poliertem Aluminiumoxid, die jedoch im Anschluß an die Politur thermisch geätzt wurde. Diese thermische Ätzung wurde bei einer Temperatur von 1.480 Grad über einen Zeitraum von 5 Stunden durchgeführt. Danach betrug der Traganteil 43 %, war also gegenüber den ursprünglichen Daten aus der Kennlinie Nr. 3 wesentlich herabgesetzt.

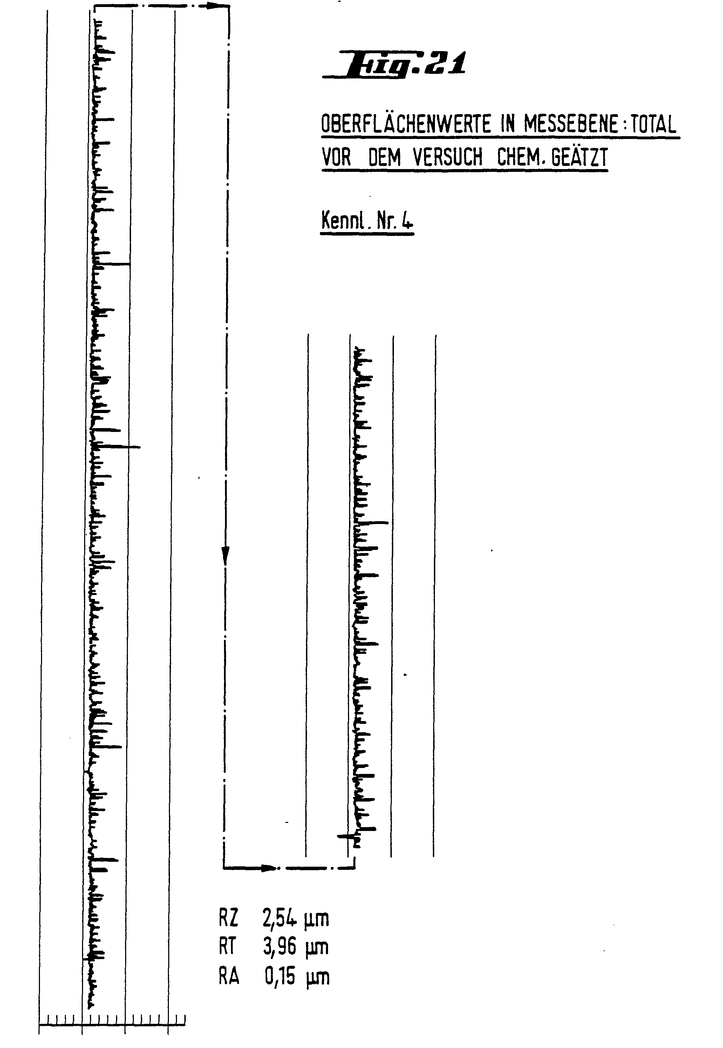

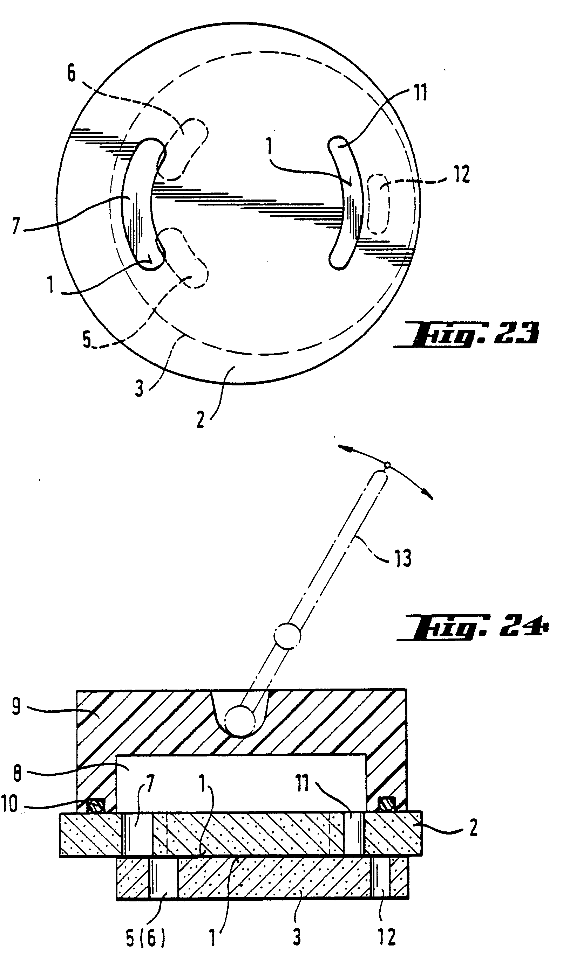

Die Fig. 18 und 22 entsprechen der Kennlinie Nr. 3. Der Unterschied ist darin zu sehen, daß in Fig. 18 das Aluminiumoxid nur poliert ohne weitere Nachbehandlung geprüft wurde, in Fig. 22 jedoch die vorher angeführte thermische Ätzung vor Aufnahme der Oberflächenwerte durchgeführt worden ist.

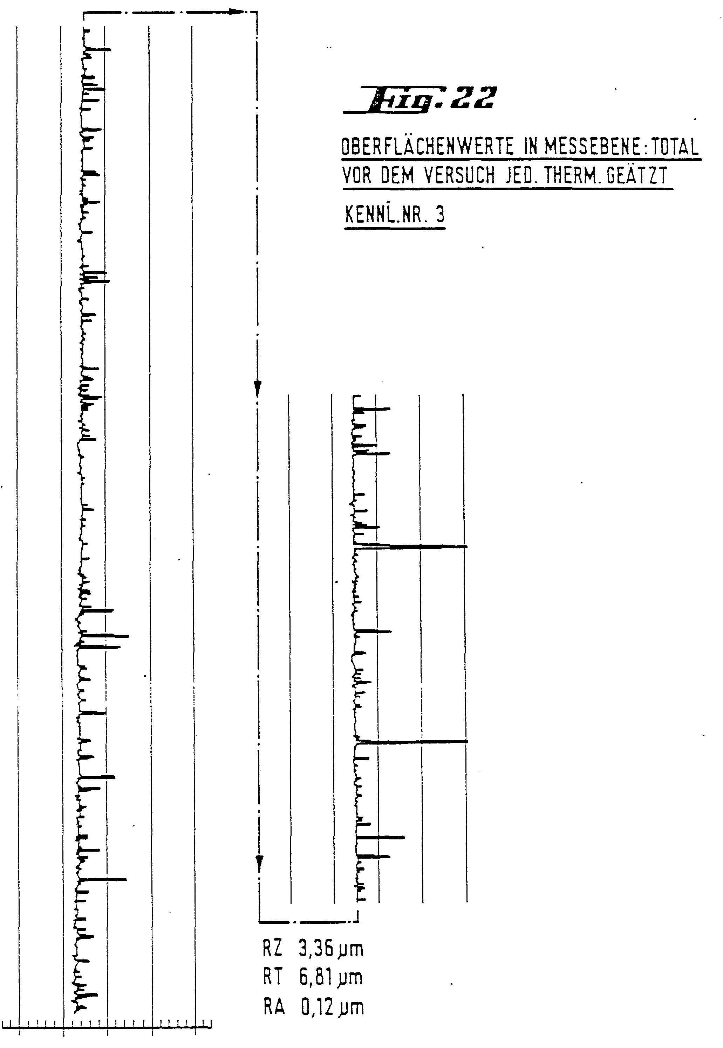

Analog verhält es sich mit Fig. 20 und Fig. 21. Die Kennlinie 4 bezieht sich gemäß Fig. 20 auf das polierte und gemäß Fig. 21 auf das polierte und chemisch geätzte Material. Die Ätzung fand dabei bei einer Temperatur von 230 Grad während 3 Minuten statt. Als Ätzmittel wurde $H_3PO_4$ eingesetzt.

Fig. 19 entsprechend Kennlinie Nr. 2 betrifft ein poliertes Aluminiumoxid mit einem Traganteil von 45 %. Hier handelt es sich ebenso wie bei der Kennlinie Nr. 1 um einen O-Versuch. Bei der Kennlinie 1 beträgt der Traganteil 70 %, um das Reibverhalten der einzelnen Produkte gegeneinander näher definieren zu können. Die in der Tabelle zusammengefaßten Werte ergeben, daß die Reibzahlen u für die Gleitreibung gemäß Kennlinie 1 und 2 von 0,24 bzw. 0,18 auf 0,13 bzw. 0,11 sinken und die Reibzahl $u_0$ für die Haftreibung von 0,38 bzw. 0,24 auf 0,20 bzw. 0,18. In allen diesen Fällen liefen Dichtscheiben aus Aluminiumoxid gegen Dichtscheiben aus dem gleichen Material. Sie wiesen jedoch unterschiedliche Traganteile auf.

Die Kennlinien Nr. 5 und 6 betreffen demgegenüber die Kombination von Scheiben aus Aluminiumoxid mit unterschiedlichem Traganteil, die gegen Dichtscheiben aus Siliziumkarbid ebenfalls mit unterschiedlichem Traganteil gelaufen sind. Bei diesem Siliziumkarbid handelt es sich um ein Material, das, wie vorstehend beschrieben, mit einer speziellen Diamantkörnung geläppt bzw. poliert wurde, so daß sich auch hierbei eine Rundung der Poren ergab, was zu den niedrigen Reibzahlen von 0,09 bzw. 0,07 für die gleitende Reibung und 0,18 bzw. 0,11 für die Haftreibung führte.

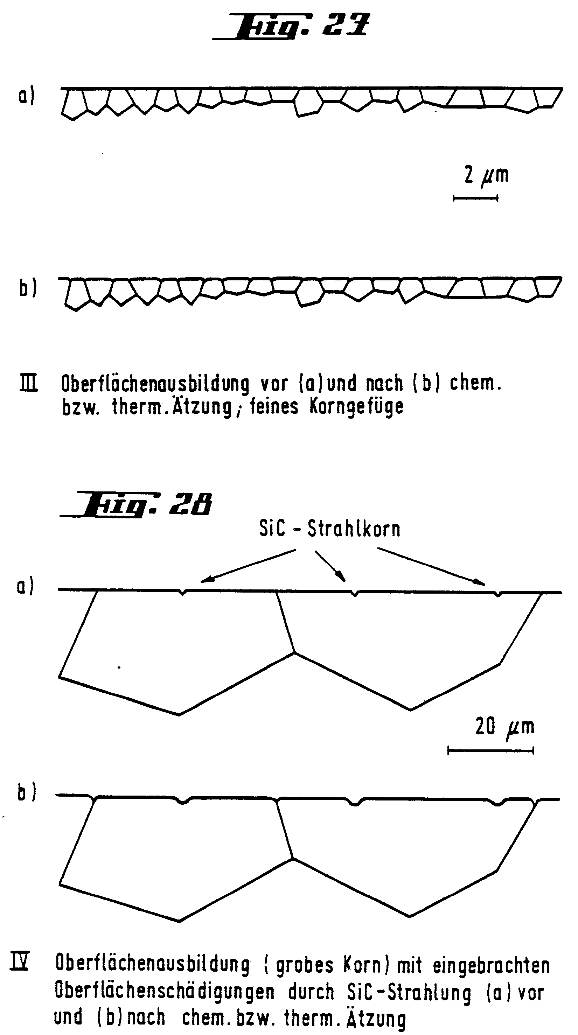

Die Fig. 25' bis 28 zeigen schematisch die Beeinflussung des Gefüges unter Zugrundelegung unterschiedlicher Gefügekorngrößen. Unter der Position a) ist dabei jeweils die Oberflächenausbildung vor und unter der Position b) die Oberflächenausbildung nach der Behandlung, also nach der chemischen bzw. thermischen Ätzung dargestellt. Fig. 25 gibt dabei ein grobes Gefüge, Fig. 26 ein mittleres, Fig. 27 ein feines Gefüge wider. In Fig. 28 ist wiederum ein grobes Korn dargestellt, das jedoch an den mit Pfeilen markierten Stellen unter a) durch Siliziumkarbidstrahlkorn in der Oberfläche aufgerauht wurde und durch die nachfolgende Ätzung, wie in b) dargestellt, verrundet wurde.

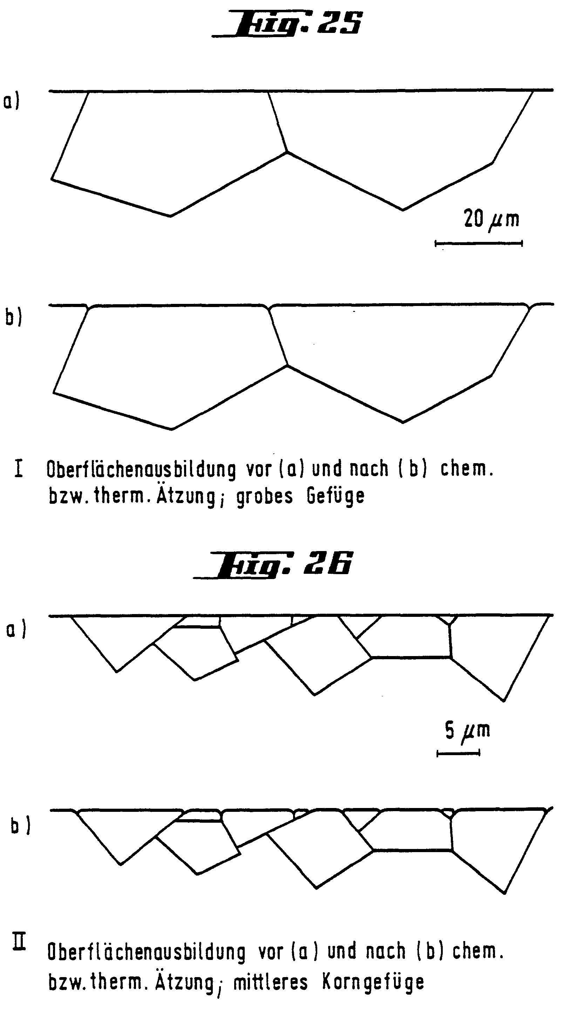

Fig. 23 zeigt eine Dichtscheibenpaarung in der Draufsicht, Fig. 24 die gleiche Dichtscheibenpaarung in der Seitenansicht im Schnitt.

Das statische Element (3) ist dabei als Ventilsitzscheibe, das dynamische Element (2) als Steuerscheibe ausgeführt. Beide Elemente (2, 3) weisen eine miteinander in Eingriff stehende Oberfläche (1) auf, die eine hohe Mikrowelligkeit besitzt. Wie in Fig. 23 dargestellt, tritt das kalte Wasser durch den Kaltwassereinlaß (5) und das warme Wasser durch den Warmwassereinlaß (6), die sich beide im statischen Element (3) befinden, nach Passieren der Passage (7), die im dynamischen Element (2) angeordnet ist, in den Mischraum (8) ein. Der Mischraum (6) wird von einer Kunststoffhaube (9) gebildet, die durch den Abdichtring (10) gegenüber dem dynamischen Element (2) abgedichtet ist. Nach Passieren des Mischraumes (8) tritt das Mischwasser durch den Wasseraustritt (11) im dynamischen Element (2) und passiert den Mischwasserauslaß (12) im statischen Element (3). Durch Drehen des Bedienungshebels (13) wird das Mischungsverhältnis verändert, d. h. die Passage (7) bei Drehung im Uhrzeigersinn weiter über den Warmwassereinlaß (6) geschoben, so daß mehr Warmwasser in den Mischraum (8) eintritt. Durch Neigen des Bedienungshebels (13) wird die Wassermenge reguliert, d. h. die Passage (7) und parallel dazu auch der Austritt (11) überdeckt den Warmwassereinlaß (6) bzw. Kaltwassereinlaß (5) und der Austritt (11) den Mischwasserauslaß (12) in mehr oder weniger großen Bereichen.

(Siehe Tabelle Seite 6 f.)

| Kenn-linie Nr. | Einlaßscheibe E Oberflächen-zustand | TA % | Ra µm | Rt µm | Rz µm | LB | Reibzahlen aus Verschiebekräfte Gleitreib. $\mu$ | Haftreib. $\mu O$ | Gegenlauf-scheibe S (Steuerscheibe) |
|---|---|---|---|---|---|---|---|---|---|
| 1 | Al₂O₃ poliert | 70 | 0,08 | 4,49 | 2,63 | <1 | 0,24 | 0,38 | Al₂O₃  TA = 70 % |
| 2 | Al₂O₃ poliert | 45 | 0,13 | 5,37 | 2,93 | <2 | 0,18 | 0,24 | Al₂O₃  TA = 85 % |
| 3 | Al₂O₃ poliert | 73 | 0,08 | 4,20 | 2,77 | <1 | – | – | |
|   | nach therm. Ätzung 1.480 °C / 5 h | 43 | 0,12 | 6,81 | 3,36 | – | 0,13 | 0,20 | Al₂O₃  TA = 76 % |
| 4 | Al₂O₃ poliert | 78 | 0,06 | 4,16 | 2,33 | <1 | – | – | |
|   | nach chem. Ätzung 3'/230 °C H3PO₄ | 40 | 0,15 | 3,96 | 2,54 | <– | 0,11 | 0,18 | Al₂O₃  TA = 71 % |
| 5 | Al₂O₃ poliert | 80 | 0,06 | 4,23 | 2,65 | 1 | 0,09 | 0,18 | CD (SiC) TA = 66 % |
| 6 | Al₂O₃ poliert | 45 | 0,14 | 5,42 | 3,89 | – | 0,07 | 0,11 | CD (SiC) TA = 60 % |

Oberflächenwerte der Kennliniengruppe 1...6 (Auszug)

1 ≙ Standardwerte (Serienfertigung), Reibzahlen wurden aus den Verschiebekräften (geringe Bewegung) errechnet.

**Patentansprüche**

1. Gleit- oder Dichtelementpaarung aus Hartstoffen, insbesondere aus gesintertem Aluminiumoxid, bei der mindestens zwei Elemente miteinander in Eingriff stehen, wobei mindestens eines der Elemente als dynamisches, das andere als statisches Element ausgeführt ist und die in Eingriff stehenden Oberflächen zur Erzielung einer hohen Maßgenauigkeit und Glätte geschliffen und geläppt sind, dadurch gekennzeichnet, daß mindestens eine der miteinander in Kontakt stehenden Oberflächen (1) eines Elementes (2, 3) zumindest in Teilbereichen mit einer hohen Mikrowelligkeit, d. h. einer Verrundung der Korngrenzen und/oder Poren durch die Vertiefungen im Bereich zwischen 0,05 und 3,00 μm auftreten, versehen ist.

2. Gleit- oder Dichtelementpaarung nach Anspruch 1, dadurch gekennzeichnet, daß die Oberfläche (1) verrundete Korngrenzen aufweist.

3. Gleit- oder Dichtelementpaarung nach Anspruch 1 oder 2, dadurch gekennzeichnet, daß die Oberfläche (1) mit verrundeten Poren (4) versehen ist.

4. Verfahren zum Herstellen einer Gleit- oder Dichtelementpaarung nach Anspruch 1, dadurch gekennzeichnet, daß im Anschluß an das Läppen die in Eingriff stehende Oberfläche chemisch geätzt wird und die Ätzdauer 1 bis 5 Minuten beträgt.

5. Verfahren nach Anspruch 4, dadurch gekennzeichnet, daß die Ätztemperatur zwischen 200 und 250 C liegt und als Ätzmittel $H_3PO_4$ eingesetzt wird.

6. Verfahren zum Herstellen einer Gleit- oder Dichtelementpaarung nach Anspruch 1, dadurch gekennzeichnet, daß mindestens eine der Oberflächen eines Elementes thermisch geätzt ist und die Ätztemperatur zwischen 1.400 und 1.560 C liegt.

7. Verfahren nach Anspruch 6, dadurch gekennzeichnet, daß die Ätzdauer der thermischen Ätzung 3 bis 7 Stunden beträgt.

8. Verfahren zum Herstellen einer Gleit- oder Dichtelementpaarung nach Anspruch 1, dadurch gekennzeichnet, daß im Anschluß an das Läppen die in Eingriff stehende Oberfläche durch Sandstrahlen nachbearbeitet und dann geätzt wird.


**Claims**

1. A sliding or sealing element combination comprising mechanically resistant materials, in particular sintered aluminium oxide, in which at least two elements are in engagement with one another, at least one of the elements being constructed as a dynamic element and the other being constructed as a static element, and the engaging surfaces being ground and polished to achieve a high dimensional accuracy and smoothness, characterized in that at least one of the engaging surfaces (1) of one element (2, 3), at least in partial areas, is provided with a high degree of microcorrugation, that is to say, a rounding of the crystal boundaries and/or voids by which depressions within the range between 0.05 and 3.00 μm occur.

2. Sliding or sealing element combination according to claim 1, characterized in that the surface (1) has rounded grain boundaries.

3. Sliding or sealing element combination according to claim 1 or 2, characterized in that the surface (1) is provided with rounded voids (4).

4. A process for the manufacture of a sliding or sealing element combination according to claim 1, characterized in that, following the polishing, the engaging surface is chemically etched and the duration of the etching is from 1 to 5 minutes.

5. A process according to claim 4, characterized in that the etching temperature is between 200 and 250 °C and $H_3PO_4$ is used as etching agent.

6. A process for the manufacture of a sliding or sealing element combination according to claim 1, characterized in that at least one of the surfaces of one element is thermally etched and the etching temperature lies between 1,400 and 1,560 °C.

7. A process according to claim 6, characterized in that the etching duration of the thermal etching is from 3 to 7 hours.

8. A process for the manufacture of a sliding or sealing element combination according to claim 1, characterized in that, following the polishing, the engaging surface is finished by sand-blasting and is then etched.


**Revendications**

1. Association d'éléments de glissement ou d'étanchéité en matériaux durs, en particulier en oxyde d'aluminium fritté, dans laquelle au moins deux éléments sont en contact, au moins un des éléments étant exécuté comme un élément dynamique, l'autre comme un élément statique, et les surfaces en contact sont meulées et rodées pour obtenir une précision dimensionnelle et un poli élevés, caractérisée par le fait qu'au moins une des surfaces en contact (1) d'un élément (2, 3) est munie au moins dans des domaines partiels, d'une micro-ondulation élevée, c'est-à-dire d'un arrondissement des limites des grains et/ou des pores, par laquelle se produisent des cavités dans le domaine compris entre 0,05 et 3,00 μm.

2. Association d'éléments de glissement ou d'étanchéité selon la revendication 1, caractérisée par le fait que la surface (1) présente des limites de grain arrondies.

3. Association d'éléments de glissement ou d'étanchéité selon la revendication 1 ou 2, caractérisée par le fait que la surface (1) est munie de pores arrondis (4).

4. Procédé de fabrication d'une association d'éléments de glissement ou d'étanchéité selon la revendication 1, caractérisé par le fait qu'après le rodage, la surface en contact est décapée chimiquement et la durée du décapage est de 1 à 5 minutes.

5. Procédé selon la revendication 4, caractérisé par le fait que la température de décapage est entre 200 et 250 °C et qu'on utilise $H_3PO_4$ comme décapant.

6. Procédé de fabrication d'une association d'éléments de glissement ou d'étanchéité selon la revendication 1, caractérisé par le fait qu'au moins une des surfaces d'un élément est thermiquement décapée et la température de décapage est entre 1 400 et 1 560 °C.

7. Procédé selon la revendication 6, caractérisé par le fait que la durée de décapage du décapage thermique est de 3 à 7 heures.

8. Procédé de fabrication d'une association d'éléments de glissement ou d'étanchéité selon la revendication 1, caractérisé par le fait qu'après le rodage, la surface en contact est soumise à un traitement ultérieur de sablage, puis décapée.

**Fig. 1**  GRENZBEREICHE DER TRAGANTEILPAARUNGEN FÜR STEUERSCHEIBEN UND EINLASSSCHEIBEN IN MISCHARMATUREN

# *Fig.2* REIBWERTE VERSCHIEDENER DICHTSCHEIBENPAARUNGEN UND OBERFLÄCHENBESCHAFFENHEITEN

REIBUNGSZAHL [μ]

0,5
0,45
0,4
0,35
0,3
0,25
0,2
0,15
0,1
0,05
0

OHNE FETT, OHNE WASSER
OHNE FETT, MIT KW + WW.
MIT FETT, MIT KW + WW

$$\mu = \frac{F_{1/2} [N]}{F_Q [N]}$$

$F_{1/2} \cong$ VERSCHIEBEKRAFTMITTEL-WERT AUS MESSDIAGRAMM

$F_Q$ = 305 N AUFLAST, KONSTANT. LAUFZEIT 25000 ZYKLEN

LANGZEITVERSUCH: 100 000 ZYKLEN

Paarung:
Einlaßsch.-Steuersch.

| $Al_2O_3 - Al_2O_3$ Ra = 0,13 - 0,145 μm TA = 80 / 85 % | $Al_2O_3 - Al_2O_3$ Ra = 0,15 / 0,12 μm TA = 4,5 / 85 % | $Al_2O_3 - Al_2O_3$ Ra = 0,17 / 0,09 μm TA = 4,3 / 98 % | $Al_2O_3 - Al_2O_3$ Ra = 0,09 / 0,17 μm TA = 98 / 4,3 % | $Al_2O_3 - CO (SiC)$ Ra = 0,15 / 0,065 μm TA = 85 / ~100 % | $Al_2O_3 - CS 107 (SiSiC)$ Ra = 0,13 / 0,05 μm TA = 4,5 / ~100 % | $Al_2O_3 - CO (SiC)$ Ra = 0,13 / 0,062 μm TA = 4,5 / ~100 % | $Al_2O_3 - CS 107 (SiSiC)$ Ra = 0,185 / 0,042 μm TA = 4,7 / ~100 % |

Fig. 3

100 µm

4

Fig. 4

4

100 µm

Fig. 5

4

10 µm

_Fig. 6_

100 µm

4

4

_Fig. 7_

100 µm

_Fig. 8_

4

10 µm

Fig.9

100 µm

Fig.10

100 µm

Fig.11

10 µm

_Fig. 12_

100 µm

_Fig. 13_

100 µm

_Fig. 14_

10 µm

6

Fig.15

4

100 µm

Fig.16

100 µm

4

Fig.17

4

10 µm

EP 0 261 108 B1

# Fig. 18

OBERFLÄCHENWERTE IN MESSEBENE: TOTAL
VOR DEM VERSUCH POLIERT

KENNL. NR. 3

RZ  2,77 µm
RT  4,20 µm
RA  0,08 µm

8

# Fig. 19

OBERFLÄCHENWERTE IN MESSEBENE: TOTAL

VOR DEM VERSUCH POLIERT

KENNL. NR. 2

RZ  2,93 µm
RT  5,37 µm
RA  0,13 µm

9

# Fig.20

## OBERFLÄCHENWERTE IN MESSEBENE: TOTAL
## VOR DEM VERSUCH POLIERT

Kennl. Nr. 4

RZ   2,33 μm
RT   4,16 μm
RA   0,06 μm

# Fig.21

OBERFLÄCHENWERTE IN MESSEBENE:TOTAL
VOR DEM VERSUCH CHEM. GEÄTZT

Kennl. Nr. 4

RZ   2,54 μm
RT   3,96 μm
RA   0,15 μm

# _Fig._ 22

OBERFLÄCHENWERTE IN MESSEBENE:TOTAL
VOR DEM VERSUCH JED. THERM. GEÄTZT

KENNL.NR. 3

RZ  3,36 µm
RT  6,81 µm
RA  0,12 µm

Fig. 23

Fig. 24

## Fig. 25

a)

20 μm

b)

I  Oberflächenausbildung vor (a) und nach (b) chem.
bzw. therm. Ätzung; grobes Gefüge

## Fig. 26

a)

5 μm

b)

II  Oberflächenausbildung vor (a) und nach (b) chem.
bzw. therm. Ätzung; mittleres Korngefüge

14

EP 0 261 108 B1

## Fig. 27

a)

2 μm

b)

Ⅲ  Oberflächenausbildung vor (a) und nach (b) chem.
   bzw. therm. Ätzung; feines Korngefüge

## Fig. 28

SiC - Strahlkorn

a)

20 μm

b)

Ⅳ  Oberflächenausbildung (grobes Korn) mit eingebrachten
   Oberflächenschädigungen durch SiC-Strahlung (a) vor
   und (b) nach chem. bzw. therm. Ätzung

15